# EUROPEAN PATENT SPECIFICATION

(11) **EP 4 037 281 B1**
(45) Date of publication and mention of the grant of the patent: **10.07.2024**
(21) Application number: 20870281.1
(22) Date of filing: 21.09.2020
(51) Int. Cl.: G06F 8/65, H04L 67/06, H04L 67/00, H04W 88/08, H04W 92/20

(54) **TRANSMISSION CONTROL METHOD, NETWORK MANAGEMENT SERVER, BASE STATION AND STORAGE MEDIUM**
ÜBERTRAGUNGSSTEUERUNGSVERFAHREN, NETZWERKVERWALTUNGSSERVER, BASISSTATION UND SPEICHERMEDIUM
PROCÉDÉ DE COMMANDE DE TRANSMISSION, SERVEUR DE GESTION DE RÉSEAU, STATION DE BASE ET SUPPORT D'INFORMATIONS

(30) Priority: 25.09.2019 CN 201910913531
(43) Date of publication of application: 03.08.2022
(73) Proprietor: ZTE Corporation, Shenzhen, Guangdong 518057 (CN)
(72) Inventor: JIN, Changsheng, Shenzhen, Guangdong 518057 (CN)
(74) Representative: Pennacchio, Salvatore Giovanni
(86) International application number: PCT/CN2020/116563
(87) International publication number: WO 2021/057666

(56) References cited:
- WO-A1-2017/088525
- CN-A- 102 238 613
- CN-A- 104 185 199
- CN-A- 106 911 741
- CN-A- 110 061 871
- US-A1- 2010 291 914
- US-B2- 8 214 470

## Description

### Technical Field

Embodiments of the present disclosure relate, but are not limited, to the field of communications, and in particular to a transmission control method, a network management server, a base station, and a storage medium.

### Background

In communication networks, a base station usually needs to download relevant files from a file server. In a file download process, after receiving a download request from a network management server, the base station requests for file download from the specified file server.

Due to the enormous number of base stations, hardware performance bottlenecks, and bandwidth limitation of a file server, the file server takes a long time to send files. Moreover, the probability of crashing of the file server increases due to the massive and frequent access of the base stations.
Document US 8214470 B2 discloses a method of upgrading software in radio base station nodes. Document US 2010/291914 A1 discloses a method of operating a telecommunications network which comprises detecting an insufficient software situation for a target radio base station.

### Summary

A transmission control method, a network management server, a base station, and a storage medium provided in the embodiments of the present disclosure solve the technical problems that the file download process in the related art consumes much time and the probability of crashing of the file server is high.

The present disclosure is set out in the appended set of claims.

To solve the above technical problems, the embodiments of the present disclosure provide a transmission control method, which is performed by a network management server and includes the following operations.

A registration request which is sent by a base station having downloaded a target file and is used for requesting to register as file providing equipment is received, wherein the registration request includes information of the target file.

The base station is configured as the file providing equipment, wherein the file providing equipment is used to provide a download service of the target file to a base station which has not downloaded the target file.

The embodiments of the present disclosure also provide a transmission control method, which is performed by a base station and includes the following operations.

After a target file is downloaded, a registration request used for requesting to register as file providing equipment is sent to a network management server, wherein the registration request includes information of the target file.

After registration is successful, a download service of the target file is provided to a base station which has not downloaded the target file.

The embodiments of the present disclosure also provide a network management server, which includes: a first processor, a first memory and a first communication bus.

The first communication bus is configured to implement connection communication between the first processor and the first memory.

The first processor is configured to execute one or more computer programs stored in the first memory to implement the operations of the network management server in the first transmission control method.

The embodiments of the present disclosure also provide a base station, which includes: a second processor, a second memory and a second communication bus.

The second communication bus is configured to implement connection communication between the second processor and the second memory.

The second processor is configured to execute one or more computer programs stored in the second memory to implement the operations of the base station in the second transmission control method.

The embodiments of the present disclosure also provide a storage medium, in which one or more computer programs are stored. The one or more computer programs are able to be executed by one or more processors to implement the operations of the first transmission control method or the second transmission control method.

The embodiments of the present disclosure have the following beneficial effects.

According to the transmission control method, the network management server, the base station and the storage medium provided by the embodiments of the present disclosure, a base station having downloaded a target file sends a registration request used for requesting to register as file providing equipment to a network management server, wherein the registration request includes information of the target file; the network management server configures the base station having downloaded the target file as the file providing equipment; and the base station serving as the file providing equipment provides a download service of the target file to a base station which has not downloaded the target file. In some implementation processes, because a base station having downloaded a target file is registered as file providing equipment, a base station which has not downloaded the target file can download the target file from the base station having downloaded the target file, thereby reducing time required for file download. In addition, the base station having downloaded the target file can share the burden with a file server, reducing the probability of crashing of the file server.

Other features and corresponding beneficial effects of the present disclosure are elaborated in the latter part of the specification, and it should be understood that at least some of the beneficial effects become apparent from the records in the specification.

### Brief Description of the Drawings

Fig. 1 is a flowchart of a transmission control method according to a first embodiment of the present disclosure.
Fig. 2 is a flowchart of file download according to a first embodiment of the present disclosure.
Fig. 3 is a flowchart of a polling process of a network management server according to a first embodiment of the present disclosure.
Fig. 4 is a flowchart of a transmission control method according to a second embodiment of the present disclosure.
Fig. 5 is a flowchart of a transmission control method according to a third embodiment of the present disclosure.
Fig. 6 is a structure diagram of a network management server according to a fifth embodiment of the present disclosure.
Fig. 7 is a structure diagram of a base station according to a fifth embodiment of the present disclosure.

### Detailed Description

For making the purpose, technical solutions and the advantages of present disclosure clearer, the embodiments of the present disclosure are further elaborated below by means of exemplary implementations combined with the accompanying drawings. It is to be understood that the exemplary embodiments described here are only used for explaining the present disclosure, but not for limiting the present disclosure.

### First Embodiment

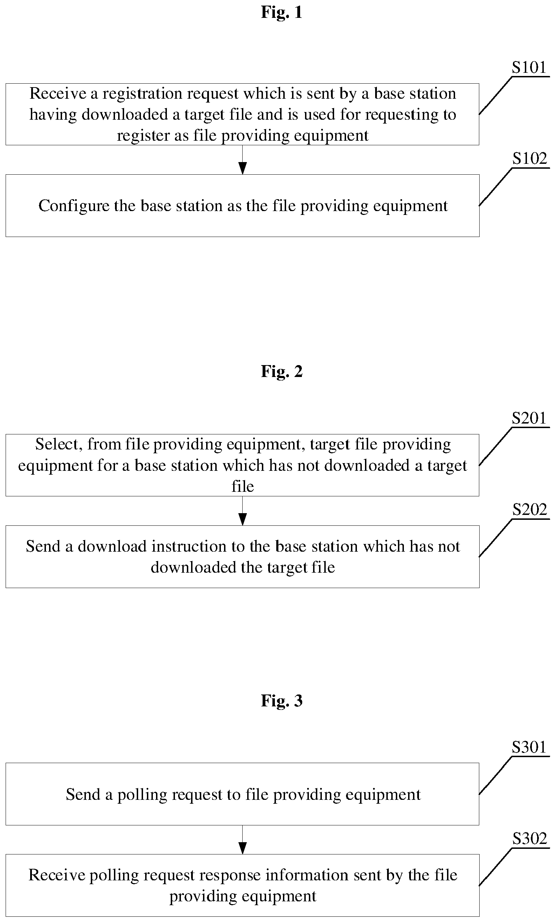

In the related art, in a case where a file needs to be downloaded, all base stations download the file from a file server. Due to the enormous number of base stations and the limitation of hardware performance and bandwidth of the file server, the base stations have to download the file from the file server in batches, which takes much time. Moreover, the file server is prone to crash due to the massive and frequent access of the base stations. To solve the above technical problems, an embodiment of the present disclosure provides a transmission control method, which is performed by a network management server. As shown in Fig. 1, the transmission control method includes S101 and S102.

At S101, a registration request which is sent by a base station having downloaded a target file and is used for requesting to register as file providing equipment is received.

In the embodiment of the present disclosure, the target file is a file that the base station needs to download, and may be a software update package. Of course, the target file may also be a file that another base station needs to download. After downloading the target file, the base station may send a registration request used for requesting to register as file providing equipment to a network management server. The file providing equipment is used to provide a file download service for a base station which has not downloaded the target file.

The network management server receives a registration request which is sent by a base station having downloaded the target file and is used for requesting to register as file providing equipment. The registration request includes information of the target file. The registration request may also include a preset load threshold, for example, a preset connection number threshold, of the base station having downloaded the target file.

In the embodiment of the present disclosure, before S101, as shown in Fig. 2, the method may also include S201 and 5202.

At 5201, target file providing equipment is selected from the file providing equipment for a base station which has not downloaded the target file.

In the embodiment of the present disclosure, before S101, in a case where the above base station (i.e., the base station having downloaded the target file mentioned in S101) has not yet downloaded the target file, the network management server needs to select, from the file providing equipment, the target file providing equipment for the base station which has not downloaded the target file.

In a case where none of base stations connected to the network management server has downloaded the target file, the file providing equipment includes only one or more file servers. Therefore, the operation that the network management server selects, from the file providing equipment, the target file providing equipment for the base station which has not downloaded the target file includes that: the target file providing equipment is selected from the one or more file servers for the base station which has not downloaded the target file. Because there are enormous number of base stations which have not downloaded the target file, the network management server may select a part of base stations from all the base stations as a first batch of base stations, and select, from the one or more file servers, the target file providing equipment for the first batch of base stations. The number of the first batch of base stations may be flexibly set according to an actual situation, for example, the bandwidth of the file server. In the embodiment of the present disclosure, when selecting the first batch of base stations, the network management server may select the first batch of base stations randomly from the base stations which have not downloaded the target file, or select, according to a network Topology (Topo) structure, a part of base stations which have not downloaded the target file as the first batch of base stations. In a case where a part of base stations which have not downloaded the target file are selected as the first batch of base stations according to the network Topo structure, in order to facilitate the first batch of base stations to subsequently provide the download service of the target file for base stations belonging to the same Topo group as the file providing equipment, the base stations not belonging to the same Topo group may be selected as the first batch of base stations, that is, the first batch of base stations respectively belong to different Topo groups.

If there is a base station having downloaded the target file in the base stations connected to the network management server, and the base station has sent the registration request to the network management server, the target file providing equipment includes the file server and the base station having downloaded the target file.

In the embodiment of the present disclosure, when selecting, from the file providing equipment, the target file providing equipment for the base station which has not downloaded the target file, the network management server may select randomly the target file providing equipment for the base station which has not downloaded the target file. Alternatively, the network management server may select the file providing equipment which is able to establish a connection with the base station which has not downloaded the target file as the target file providing equipment. For example, the network management server may select, from the file providing equipment according to a Topo structure, the file providing equipment belonging to the same Topo group as the base station which has not downloaded the target file as the target file providing equipment. Because the target file providing equipment and the base station which has not downloaded the target file belong to the same Topo group, the file providing equipment and the base station are able to conduct communication connection. For example, assuming the base stations managed by the network management server include two Topo groups, the first Topo group includes base station 1, base station 2 and base station 3, and the second Topo group includes base station 4, base station 5 and base station 6, the base station 1 and the base station 2 have downloaded the target file, and the base station 2, the base station 3, the base station 5 and the base station 6 have not downloaded the target file. When selecting the target file providing equipment for the base station 2 or the base station 3, the network management server selects, according to a Topo structure, the base station 1 belonging to the same Topo group as the base station 2 or the base station 3 as the target file providing equipment. When selecting the target file providing equipment for the base station 5 or the base station 6, the network management server selects, according to a Topo structure, the base station 4 belonging to the same Topo group as the base station 5 or the base station 6 as the target file providing equipment.

In the embodiment of the present disclosure, when selecting, from the file providing equipment, the target file providing equipment for the base station which has not downloaded the target file, the network management server may select, according to load state information of each file providing equipment, the target file providing equipment for the base station which has not downloaded the target file. That is, the network management server may select, according to the load state information of each file providing equipment, the target file providing equipment with low load for the base station which has not downloaded the target file. For example, the network management server may select, according to the load state information of each file providing equipment, file providing equipment with a least load as the target file providing equipment for the base station which has not downloaded the target file; or, the network management server may select, according to the load state information of each file providing equipment, file providing equipment whose current load is less than a preset load threshold as the target file providing equipment for the base station which has not downloaded the target file. In the embodiment of the present disclosure, the load state information may include at least one of the number of first base stations, the number of files transmitted, download progress, etc. The first base stations are base stations that are currently connected to the file providing equipment and need to download a file from the file providing equipment. It should be understood that the first base stations include base stations that are currently connected to the file providing equipment and are downloading a file from the file providing equipment, and the first base stations may also include base stations that are currently connected to the file providing equipment and in a state of waiting to download a file. The number of files transmitted is the number of files transmitted from the file providing equipment to the base station. The download progress is the progress of transmitting a file from the file providing equipment to the base station.

For example, in a case where the load state information includes the number of first base stations, the operation that the file providing equipment with the least load is selected, according to the load state information of each file providing equipment, as the target file providing equipment for the base station which has not downloaded the target file includes that: according to the number of the first base stations of each file providing equipment, the file providing equipment with the smallest number of the first base stations is selected as the target file providing equipment for the base station which has not downloaded the target file. For example, assuming the file providing equipment includes equipment 1, equipment 2 and equipment 3, the current number of the first base stations of the equipment 1 is 2, the current number of the first base stations of the equipment 2 is 4, and the current number of the first base stations of the equipment 3 is 6, the equipment 1 is selected as the target file providing equipment.

In a case where the load state information includes the number of first base stations, the operation that according to the load state information of each file providing equipment, the file providing equipment whose current load is less than the preset load threshold is selected as the target file providing equipment for the base station which has not downloaded the target file includes that: according to the number of the first base stations of each file providing equipment, the file providing equipment whose corresponding number of the first base stations is less than a preset connection number threshold is selected as the target file providing equipment for the base station which has not downloaded the target file. In the embodiment of the present disclosure, a connection number threshold may be set for the file providing equipment. If the number of the base stations that are currently connected to the file providing equipment and need to download a file has reached the connection number threshold, the file providing equipment may refuse to connect to another base station that needs to download the file, which can thereby prevent the file providing equipment from being overloaded and crashing. For example, assuming the file providing equipment includes equipment 7, equipment 8 and equipment 9, and the connection number thresholds corresponding to each equipment are 10, 20, and 30 respectively, if the number of first base stations of the equipment 7 is 10 (that is, the number of the base stations that are currently connected to the equipment 7 and need to download files from the equipment 7 is 10), the number of first base stations of the equipment 8 is 20, and the number of first base stations of the equipment 10 is 15, because the connection number threshold of the equipment 10 is greater than the number of first base stations, the equipment 10 is selected as the target file providing equipment.

In the embodiment of the present disclosure, in order to acquire the load state information of the file providing equipment, as shown in Fig. 3, the method may also include the following operations.

At S301, a polling request is sent to the file providing equipment.

The network management server may periodically send a polling request to the file providing equipment.

At S302, polling request response information sent by the file providing equipment is received.

After receiving the polling request sent by the network management server, the file providing equipment sends the polling request response information to the network management server. The polling request response information includes the load state information of the file providing equipment. The polling request response information may also include the name of the file currently stored in the file providing equipment, the size of each file, and a check value of the file.

In the embodiment of the present disclosure, after the network management server sends the polling request to the file providing equipment, if the network management server has not received the polling request response information sent by the file providing equipment in response to the polling request, the network management server may reassign file providing equipment for a base station which has not completed downloading a file from the file providing equipment, in this case, the file providing equipment may also be removed from a list of the file providing equipment. A list of the base stations that have not completed downloading files from the file providing equipment may be determined according to the download progress and other information in the latest polling request response information received by the network management server and sent by the file providing equipment. If the network management server sends the polling request to the file providing equipment for a preset number of times but does not receive the polling request response information, the network management server may reassign file providing equipment for the base station which has not completed downloading a file from the file providing equipment, and at the same time, the file providing equipment may be removed from the list of the file providing equipment. The preset number of times may be set according to actual needs, for example, to 2 or 3. For a better understanding, an example is provided. Assuming the network management server does not receive the polling request response information from the equipment 1 after sending the polling request to the equipment 1 as the file providing equipment for three times, the network management server may obtain the list of the base stations which have not completed downloading according to the download progress in the latest polling request response information sent by the equipment 1, and reassign file providing equipment for these base stations, and at the same time, the network management server may remove the equipment 1 from the list of the file providing equipment, that is, after being removed, the equipment 1 no longer serves as the file providing equipment.

At 5202, a download instruction is sent to the base station which has not downloaded the target file.

After selecting the target file providing equipment for the base station which has not downloaded the target file, the network management server sends a download instruction to the base station which has not downloaded the target file. The download instruction includes the information of the target file and the information of the target file providing equipment. The download instruction is used to instruct the base station which has not downloaded the target file to download the target file from the target file providing equipment. In this way, the base station can download the target file from the target file providing equipment according to the download instruction.

At S102, the base station is configured as file providing equipment.

In the embodiment of the present disclosure, after receiving the registration request which is sent by the base station having downloaded the target file and used for requesting to register as the file providing equipment, the network management server configures the base station having downloaded the target file as the file providing equipment, that is, the base station having downloaded the target file may provide the download service of the target file to the base station which has not downloaded the target file. In this way, when selecting the target file providing equipment for the base station which has not downloaded the target file, the network management server may select, according to an actual situation, the base station having downloaded the target file as the target file providing equipment, so that the base station which has not downloaded the target file downloads the target file from the base station having downloaded the target file.

It is to be noted that the transmission control method provided in the embodiment of the present disclosure may be applied to the Internet of Things, operator networks, etc.

Through the transmission control method provided in the embodiment of the present disclosure, the registration request which is sent by the base station having downloaded the target file and is used for requesting to register as the file providing equipment is received, wherein the registration request includes the information of the target file; and the base station is configured as the file providing equipment which is used to provide the download service of the target file to the base station which has not downloaded the target file. In some implementation processes, because the base station having downloaded the target file is registered as the file providing equipment, the base station which has not downloaded the target file can download the target file from the base station having downloaded the target file, thereby reducing time required for file download. In addition, the base station having downloaded the target file can share the burden with the file server, reducing the probability of crashing of the file server.

### Second Embodiment

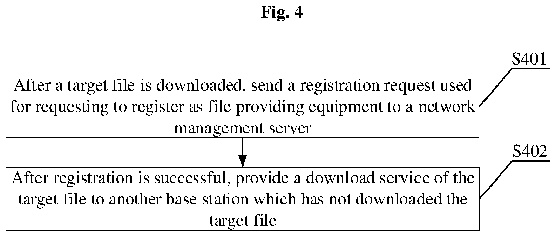

In the related art, in a case where a file needs to be downloaded, all base stations download the file from a file server. Due to the enormous number of base stations and the limitation of hardware performance and bandwidth of the file server, the base stations have to download the file from the file server in batches, which takes much time. Moreover, the file server is prone to crash due to the massive and frequent access of the base stations. To solve the above technical problems, an embodiment of the present disclosure provides a transmission control method, which is performed by a base station. As shown in Fig. 4, the transmission control method includes S401 and S402.

At S401, after a target file is downloaded, a registration request used for requesting to register as file providing equipment is sent to a network management server.

In the embodiment of the present disclosure, after downloading the target file, the base station may send the registration request used for requesting to register as file providing equipment to the network management server. The target file is a file that the base station needs to download, and may be a software update package. Of course, the target file may also be a file that another base station needs to download. The registration request includes information of the target file. The registration request may also include a preset load threshold, for example, a preset connection number threshold, of the base station.

The file providing equipment is used to provide a download service of the target file to the base station which has not downloaded the target file.

In the embodiment of the present disclosure, the target file may include one file or at least two files, the base station may send the registration request to the network management server after downloading a target file, or send the registration request to the network management server after downloading all target files.

In the embodiment of the present disclosure, before S401, the base station needs to download the target file. The process that the base station downloads the target file may include that: the download instruction sent by the network management server is received, and the target file is downloaded from the target file providing equipment based on the download instruction. The download instruction includes the information of the target file and the information of the target file providing equipment. The target file providing equipment may be the file server or the base station having downloaded the target file. The operation that the base station downloads the target file from the target file providing equipment based on the download instruction includes that: the base station establishes a connection with the target file providing equipment; and the target file providing equipment sends the target file to the base station. The target file providing equipment may send the target file to the base station based on any one of File Transfer Protocol (FTP), SSH File Transfer Protocol (SFTP) and Hyper Text Transfer Protocol (HTTP).

At S402, after registration is successful, a download service of the target file is provided to another base station which has not downloaded the target file.

In the embodiment of the present disclosure, after registration is successful, the base station having downloaded the target file may provide, as the file providing equipment, the download service of the target file to another base station which has not downloaded the target file. That is, after receiving the download instruction, the base station which has not downloaded the target file establishes a connection with the base station having downloaded the target file, and then the base station having downloaded the target file sends the target file to the base station which has not downloaded the target file.

In the embodiment of the present disclosure, after S402, as the file providing equipment, the base station having downloaded the target file also receives the polling request sent by the network management server, and sends the polling request response information to the network management server. The polling request response information includes the load state information of the file providing equipment. The load state information may include at least one of the number of first base stations, the number of files transmitted, download progress, etc. The first base stations are base stations that are currently connected to the file providing equipment and need to download files from the file providing equipment. It should be understood that the first base stations include base stations that are currently connected to the file providing equipment and are downloading a file from the file providing equipment, and the first base stations may also include base stations that are currently connected to the file providing equipment and in a state of waiting to download a file. The number of files transmitted is the number of files transmitted from the file providing equipment to the base station. The download progress is the progress of transmitting a file from the file providing equipment to the base station. The polling request response information may also include the name of the file currently stored in the file providing equipment, the size of each file, and a check value of the file.

It is to be noted that the transmission control method provided in the embodiment of the present disclosure may be applied to the Internet of Things, operator networks, etc.

Through the transmission control method provided in the embodiment of the present disclosure, after the target file is downloaded, the registration request used for requesting to register as the file providing equipment is sent to the network management server, wherein the registration request includes the information of the target file; and after registration is successful, the download service of the target file is provided to the base station which has not downloaded the target file. In some implementation processes, because the base station having downloaded the target file is registered as the file providing equipment, the base station which has not downloaded the target file can download the target file from the base station having downloaded the target file, thereby reducing time required for file download. In addition, the base station having downloaded the target file can share the burden with the file server, reducing the probability of crashing of the file server.

### Third Embodiment

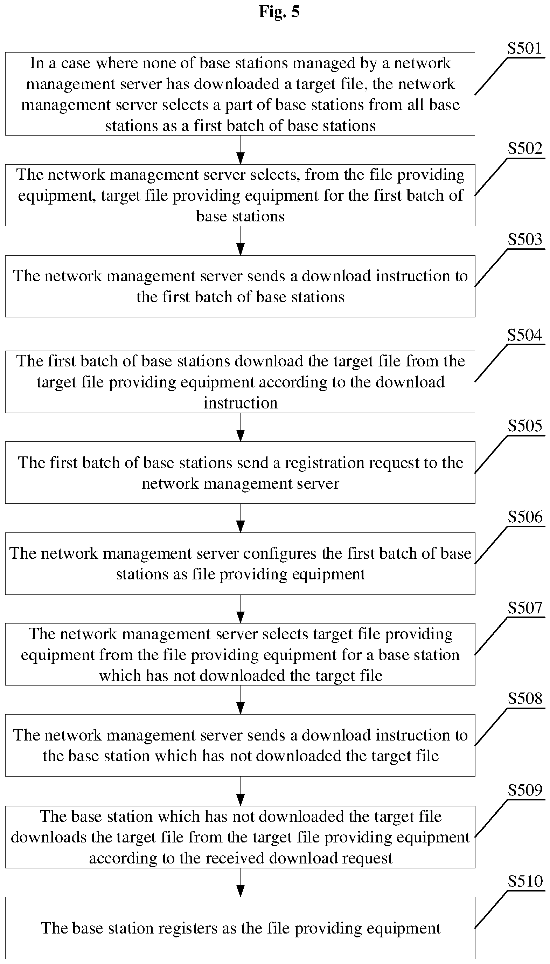

For a better understanding of the present disclosure, the present embodiment is illustrated with more specific examples. As shown in Fig. 5 which is a flowchart of a transmission control method provided by an embodiment of the present disclosure, the transmission control method may include the following operations.

At S501, in a case where none of base stations managed by a network management server has downloaded a target file, the network management server selects a part of base stations from all base stations as a first batch of base stations.

It is to be noted that the target file is a file that the base station needs to download. For example, in a case where base station software needs to be updated, the base station needs to download a software update package. In this case, the target file is the software update package. Of course, in other embodiments, the target file may also be another file.

In the embodiment of the present disclosure, the number of the first batch of base stations may be determined according to the bandwidth of the file server, etc. When selecting the first batch of base stations, the network management server may select, according to a Topo structure, the base stations belonging to different Topo groups as the first batch of base stations, that is, the first batch of base stations respectively belong to different Topo groups.

At S502, the network management server selects, from the file providing equipment, target file providing equipment for the first batch of base stations.

In the present embodiment, the file providing equipment includes one or more file servers, and the network management server selects, from the one or more file servers, the target file providing equipment for the first batch of base stations.

At S503, the network management server sends the download instruction to the first batch of base stations.

The download instruction includes the information of the target file and the information of the target file providing equipment.

At S504, the first batch of base stations download the target file from the target file providing equipment according to the download instruction.

The first batch of base stations establish a connection with the file server based on the download instruction, and download the target file from the file server.

At S505, the first batch of base stations send a registration request to the network management server.

After any of the first batch of base stations completes downloading the target file, the base station, as a base station having downloaded the target file, sends the registration request to the network management server. The registration request includes the information of the target file downloaded by the base station and the connection number threshold.

At S506, the network management server configures the first batch of base stations as the file providing equipment.

After receiving the registration request sent by any of the first batch of base stations, the network management server configures the base station as the file providing equipment, that is, adds the base station to the list of the file providing equipment.

At S507, the network management server selects, from the file providing equipment, the target file providing equipment for a base station which has not downloaded the target file.

Because the file providing equipment includes one or more file servers and one or more base station having downloaded the target file, the network management server selects, from the one or more file servers and the one or more base station having downloaded the target file, the target file providing equipment for the base station which has not downloaded the target file.

The network management server may select, according to a Topo structure, the target file providing equipment for the base station which has not downloaded the target file. For example, in a case where there is no base station serving as the file providing equipment (namely the base station having downloaded the target file) in the Topo group to which the base station which has not downloaded the target file belongs, the file server may be selected as the target file providing equipment for the base station which has not downloaded the target file. In a case where there is base station serving as the file providing equipment in the Topo group to which the base station which has not downloaded the target file belongs, the file providing equipment belonging to the same Topo group may be selected as the target file providing equipment for the base station which has not downloaded the target file.

In a case where the target file providing equipment is selected, the file providing equipment whose load is less than the preset load threshold may be selected as the target file providing equipment according to the load state information of each file providing equipment. The load state information includes the number of first base stations. The first base stations are base stations that are currently connected to the file providing equipment and need to download a file from the file providing equipment. The first base stations include base stations that are currently connected to the file providing equipment and are downloading a file from the file providing equipment, and base stations that are currently connected to the file providing equipment and in a state of waiting to download a file. The preset load threshold includes the preset connection number threshold. The file providing equipment whose number of the first batch of base stations is less than the connection number threshold is selected as the target file providing equipment.

In order to acquire the load state information of the file providing equipment, in the present embodiment, the network management server may periodically send a polling request to the file providing equipment, and the file providing equipment sends polling request response information to the network management server after receiving the polling request. The polling request response information includes the number of first base stations, the number of files transmitted, the download progress, the name of the file currently stored in the file providing equipment, the size of each file and the check value of the file.

In the embodiment of the present disclosure, if the network management server sends the polling request to the file providing equipment for a preset number of times but does not receive the polling request response information sent by the file providing equipment, the network management server removes the file providing equipment from the list of the file providing equipment, and reassigns file providing equipment for the base station which has not completed downloading a file from the file providing equipment.

At S508, the network management server sends a download instruction to the base station which has not downloaded the target file.

The download instruction includes the information of the target file providing equipment that the network management server selects for the base station which has not downloaded the target file and the information of the target file.

At S509, the base station which has not downloaded the target file downloads the target file from the target file providing equipment according to a received download request.

It should be understood that the base station which has not downloaded the target file establishes a connection with the target file providing equipment according to the download request, and downloads the target file.

At S510, the base station registers as the file providing equipment.

After downloading the target file, the base station which has not downloaded the target file registers as the file providing equipment, and provides a file download service for the base station which has not downloaded the target file. For the process by which the base station registers as the file providing equipment, see the process that the first batch of base stations register as the file providing equipment, elaborations are omitted herein.

According to the transmission control method provided by the embodiment of the present disclosure, a base station having downloaded a target file sends a registration request used for requesting to register as file providing equipment to a network management server, wherein the registration request includes information of the target file; the network management server configures the base station having downloaded the target file as file providing equipment; and the base station serving as the file providing equipment provides a download service of the target file to a base station which has not downloaded the target file. In some implementation processes, because a base station having downloaded a target file is registered as file providing equipment, a base station which has not downloaded the target file can download the target file from the base station having downloaded the target file, thereby reducing time required for file download. In addition, the base station having downloaded the target file can share the burden with a file server, reducing the probability of crashing of the file server.

### Fourth Embodiment

The present embodiment provides a transmission control system based on the first embodiment, the second embodiment and the third embodiment. The transmission control system includes a network management server and a base station.

The base station is configured to send, after completing downloading a target file, a registration request used for requesting to register as file providing equipment to the network management server, wherein the registration request includes information of the target file. The target file is a file that the base station needs to download, and may be a software update package. Of course, the target file may also be a file that another base station needs to download. The file providing equipment is used to provide a file download service to the base station which has not downloaded the target file. The registration request includes the information of the target file. The registration request may also include a preset load threshold, for example, a preset connection number threshold, of the base station having downloaded the target file. In the embodiment of the present disclosure, the target file may include one file or at least two files, the base station may send the registration request to the network management server after downloading a target file, or send the registration request to the network management server after downloading all target files.

The network management server is configured to configure, after receiving the registration request sent by the base station having downloaded the target file, the base station as the file providing equipment. In this way, the base station having downloaded the target file registers successfully, becomes the file providing equipment, and provides the download service of the target file to the base station which has not downloaded the target file.

In the embodiment of the present disclosure, before sending the registration request used for requesting to register as the file providing equipment to the network management server, the base station also needs to download the target file. The download process may include that: the network management server selects, from the file providing equipment, the target file providing equipment for a base station which has not downloaded the target file, and sends the download instruction to the base station which has not downloaded the target file. The download instruction includes the information of the target file and the information of the target file providing equipment. After receiving the download instruction, the base station downloads the target file from the target file providing equipment based on the download instruction. The operation that the base station downloads the target file from the target file providing equipment based on the download instruction includes that: the base station establishes a connection with the target file providing equipment; and the target file providing equipment sends the target file to the base station. The target file providing equipment may send the target file to the base station based on any one of FTP, SFTP and HTTP.

In the embodiment of the present disclosure, the transmission control system may also include a file server which provides the file download service for the base station. In a case where none of base stations connected to the network management server has downloaded the target file, the file providing equipment includes only one or more file servers. Therefore, the operation that the network management server selects, from the file providing equipment, the target file providing equipment for the base station which has not downloaded the target file includes that: the target file providing equipment is selected from the one or more file servers for the base station which has not downloaded the target file. Because there are enormous number of base stations which have not downloaded the target file, the network management server may select a part of base stations from all the base stations as a first batch of base stations, and select, from the one or more file servers, the target file providing equipment for the first batch of base stations. The number of the first batch of base stations may be flexibly set according to an actual situation, for example, the bandwidth of the file server. In the embodiment of the present disclosure, when selecting the first batch of base stations, the network management server may select the first batch of base stations randomly from the base stations which have not downloaded the target file, or select, according to a network Topo structure, a part of base stations which have not downloaded the target file as the first batch of base stations. In a case where a part of base stations which have not downloaded the target file are selected as the first batch of base stations according to the network Topo structure, in order to facilitate the first batch of base stations to subsequently provide the download service of the target file for base stations belonging to the same Topo group as the file providing equipment, the base stations not belonging to the same Topo group may be selected as the first batch of base stations, that is, the first batch of base stations respectively belong to different Topo groups.

If there is a base station having downloaded the target file in the base stations connected to the network management server, and the base station has sent the registration request to the network management server, the target file providing equipment includes the file server and the base station having downloaded the target file.

In the embodiment of the present disclosure, when selecting, from the file providing equipment, the target file providing equipment for the base station which has not downloaded the target file, the network management server may select randomly the target file providing equipment for the base station which has not downloaded the target file. Alternatively, the network management server may select the file providing equipment which is able to establish a connection with the base station which has not downloaded the target file as the target file providing equipment. For example, the network management server may select, according to a Topo structure, the file providing equipment belonging to the same Topo group as the base station which has not downloaded the target file from the file providing equipment as the target file providing equipment. Because the target file providing equipment and the base station which has not downloaded the target file belong to the same Topo group, the file providing equipment and the base station are able to conduct communication connection. For example, assuming the base stations managed by the network management server include two Topo groups, the first Topo group includes base station 1, base station 2 and base station 3, and the second Topo group includes base station 4, base station 5 and base station 6, the base station 1 and the base station 2 have downloaded the target file, and the base station 2, the base station 3, the base station 5 and the base station 6 have not downloaded the target file. When selecting the target file providing equipment for the base station 2 or the base station 3, the network management server selects, according to a Topo structure, the base station 1 belonging to the same Topo group as the base station 2 or the base station 3 as the target file providing equipment. When selecting the target file providing equipment for the base station 5 or the base station 6, the network management server selects, according to a Topo structure, the base station 4 belonging to the same Topo group as the base station 5 or the base station 6 as the target file providing equipment.

In the embodiment of the present disclosure, when selecting, from the file providing equipment, the target file providing equipment for the base station which has not downloaded the target file, the network management server may select, according to load state information of each file providing equipment, the target file providing equipment for the base station which has not downloaded the target file. That is, the network management server may select, according to the load state information of each file providing equipment, the target file providing equipment with low load for the base station which has not downloaded the target file. For example, the network management server may select, according to the load state information of each file providing equipment, file providing equipment with a least load as the target file providing equipment for the base station which has not downloaded the target file; or, the network management server may select, according to the load state information of each file providing equipment, file providing equipment whose current load is less than a preset load threshold as the target file providing equipment for the base station which has not downloaded the target file. In the embodiment of the present disclosure, the load state information may include at least one of the number of first base stations, the number of files transmitted, download progress, etc. The first base stations are base stations that are currently connected to the file providing equipment and need to download a file from the file providing equipment. It should be understood that the first base stations include base stations that are currently connected to the file providing equipment and are downloading a file from the file providing equipment, and the first base stations may also include base stations that are currently connected to the file providing equipment and in a state of waiting to download a file. The number of files transmitted is the number of files transmitted from the file providing equipment to the base station. The download progress is the progress of transmitting a file from the file providing equipment to the base station.

For example, in a case where the load state information includes the number of first base stations, the operation that the file providing equipment with the least load is selected, according to the load state information of each file providing equipment, as the target file providing equipment for the base station which has not downloaded the target file includes that: according to the number of the first base stations of each file providing equipment, the file providing equipment with the smallest number of the first base stations is selected as the target file providing equipment for the base station which has not downloaded the target file. For example, assuming the file providing equipment includes equipment 1, equipment 2 and equipment 3, the current number of the first base stations of the equipment 1 is 2, the current number of the first base stations of the equipment 2 is 4, and the current number of the first base stations of the equipment 3 is 6, the equipment 1 is selected as the target file providing equipment.

In a case where the load state information includes the number of first base stations, the operation that according to the load state information of each file providing equipment, the file providing equipment whose current load is less than the preset load threshold is selected as the target file providing equipment for the base station which has not downloaded the target file includes that: according to the number of the first base stations of each file providing equipment, the file providing equipment whose corresponding number of the first base stations is less than a preset connection number threshold is selected as the target file providing equipment for the base station which has not downloaded the target file. In the embodiment of the present disclosure, a connection number threshold may be set for the file providing equipment. If the number of the base stations that are currently connected to the file providing equipment and need to download a file has reached the connection number threshold, the file providing equipment may refuse to connect to another base station that needs to download the file, which can thereby prevent the file providing equipment from being overloaded and crashing. For example, assuming the file providing equipment includes equipment 7, equipment 8 and equipment 9, and the connection number thresholds corresponding to each equipment are 10, 20, and 30 respectively, if the number of first base stations of the equipment 7 is 10 (that is, the number of the base stations that are currently connected to the equipment 7 and need to download files from the equipment 7 is 10), the number of first base stations of the equipment 8 is 20, and the number of first base stations of the equipment 10 is 15, because the connection number threshold of the equipment 10 is greater than the number of first base stations, the equipment 10 is selected as the target file providing equipment.

In the embodiment of the present disclosure, in order to acquire the load state information of the file providing equipment, the network management server may send a polling request to the file providing equipment, and the file providing equipment sends polling request response information to the network management server after receiving the polling request. The polling request response information includes load state information of the file providing equipment. The polling request response information may also include the name of the file currently stored in the file providing equipment, the size of each file, and a check value of the file. The network management server may periodically send a polling request to the file providing equipment.

In the embodiment of the present disclosure, after the network management server sends the polling request to the file providing equipment, if the network management server has not received the polling request response information sent by the file providing equipment in response to the polling request, the network management server may reassign file providing equipment for a base station which has not completed downloading a file from the file providing equipment, in this case, the file providing equipment may also be removed from a list of the file providing equipment. A list of the base stations that have not completed downloading files from the file providing equipment may be determined according to the download progress and other information in the latest polling request response information received by the network management server and sent by the file providing equipment. If the network management server sends the polling request to the file providing equipment for a preset number of times but does not receive the polling request response information, the network management server may reassign file providing equipment for the base station which has not completed downloading a file from the file providing equipment, and at the same time, the file providing equipment may be removed from the list of the file providing equipment. The preset number of times may be set according to actual needs, for example, to 2 or 3. For a better understanding, an example is provided. Assuming the network management server does not receive the polling request response information from the equipment 1 after sending the polling request to the equipment 1 as the file providing equipment for three times, the network management server may obtain the list of the base stations which have not completed downloading according to the download progress in the latest polling request response information sent by the equipment 1, and reassign file providing equipment for these base stations, and at the same time, the network management server may remove the equipment 1 from the list of the file providing equipment, that is, after being removed, the equipment 1 no longer serves as the file providing equipment.

According to the transmission control system provided by the embodiment of the present disclosure, the network management server, the base station and the storage medium, a base station having downloaded a target file sends a registration request used for requesting to register as file providing equipment to a network management server, wherein the registration request includes information of the target file; the network management server configures the base station having downloaded the target file as file providing equipment; and the base station serving as the file providing equipment provides a download service of the target file to a base station which has not downloaded the target file. In some implementation processes, because a base station having downloaded a target file is registered as file providing equipment, a base station which has not downloaded the target file can download the target file from the base station having downloaded the target file, thereby reducing time required for file download. In addition, the base station having downloaded the target file can share the burden with a file server, reducing the probability of crashing of the file server.

### Fifth Embodiment

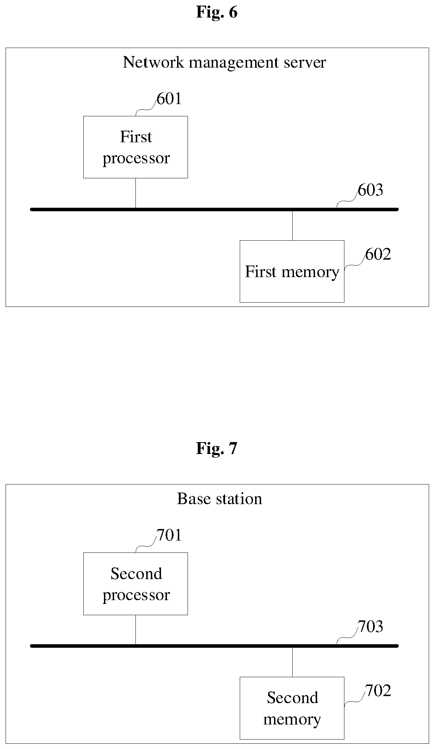

The present embodiment provides network management server, which includes a first processor 601, a first memory 602 and a first communication bus 603, as shown in Fig. 6.

The first communication bus 603 is configured to implement connection communication between the first processor 601 and the first memory 602.

The first processor 601 is configured to execute one or more computer programs stored in the first memory 602 to implement at least one operation of the network management server in the transmission control methods according to a first embodiment, the second embodiment and the third embodiment.

The present embodiment also provides a base station, which includes a second processor 701, a second memory 702 and a second communication bus 703, as shown in Fig. 7.

The second communication bus 703 is configured to implement connection communication between the second processor 701 and the second memory 702.

The second processor 701 is configured to execute one or more computer programs stored in the second memory 702 to implement at least one operation of the base station in the transmission control methods according to a first embodiment, the second embodiment and the third embodiment.

The present embodiment also provides a storage medium, which includes a volatile or non-volatile medium, or a removable or un-removable medium which is implemented in any method or technology for storing information (such as a computer-readable instruction, a data structure, a computer program module or other data). The computer-readable storage media include, but are not limited to, a Random Access Memory (RAM), a Read-Only Memory (ROM), an Electrically Erasable Programmable ROM (EEPROM), an Electrically Erasable Programmable Read-Only Memory (EEPROM), a flash memory or other memory technologies, a Compact Disc Read-Only Memory (CD-ROM), a Digital Video Disk (DVD) or other optical storage, a cartridge, a tape, a disk storage or other magnetic storage devices, or any other media which may be used for storing expected information and may be accessed by a computer.

The computer-readable storage medium in the embodiment of the present disclosure may be configured to store one or more computer programs. The stored one or more computer programs may be executed by the processor to implement at least one operation of the network management server or the base station in the transmission control methods according to the first embodiment, the second embodiment and the third embodiment.

According to the network management server, the base station and the storage medium provided by the embodiments of the present disclosure, a base station having downloaded a target file sends a registration request used for requesting to register as file providing equipment to a network management server, wherein the registration request includes information of the target file; the network management server configures the base station having downloaded the target file as file providing equipment; and the base station serving as the file providing equipment provides a download service of the target file to a base station which has not downloaded the target file. In some implementation processes, because a base station having downloaded a target file is registered as file providing equipment, a base station which has not downloaded the target file can download the target file from the base station having downloaded the target file, thereby reducing time required for file download. In addition, the base station having downloaded the target file can share the burden with a file server, reducing the probability of crashing of the file server.

It can be seen that those having ordinary skill in the art should understand that all or some of the operations in the above method disclosed, the system, the functional modules/units in the device may be implemented as software (which may be realized by computer program codes executable for a computing device), firmware, hardware, and a proper combination of them. In an implementation of hardware, the division among the functional modules/units mentioned in the above description does not necessarily correspond to the division of physical units; for example, a physical component may have multiple functions, or a function or operation may be performed by several physical components in coordination. Some or all of the physical components may be implemented as software performed by a processor, for example, a central processing unit, a digital signal processor or a microprocessor, or implemented as hardware, or implemented as an integrated circuit, for example, an application-specific integrated circuit. Moreover, as those of ordinary skill in the art know, the communication media generally include the computer-readable instruction, the data structure, the computer program module, or other data, such as carriers or other transmission mechanisms, in a modulation data signal, and may include any information delivery media. Therefore, the present disclosure is not limited to any particular combination of hardware and software.

The above contents are further elaborations of the embodiments of the present disclosure made with reference to the exemplary embodiments, but it should not be considered that the exemplary implementation of the present disclosure is limited to these elaborations. On the premise of not departing from the conception of the present disclosure, those ordinary skill in the art to which the present disclosure belongs may also make some simple deductions and replacements, which should fall within the scope of protection of the present disclosure.

## Claims

1. A transmission control method, performed by a network management server and comprising:
receiving (S101) a registration request which is sent by a base station having downloaded a target file and used for requesting to register as file providing equipment, wherein the registration request comprises information of the target file; and
configuring (S102) the base station as the file providing equipment, wherein the file providing equipment is used to provide a download service of the target file to a base station which has not downloaded the target file, wherein before the receiving (S101) the registration request which is sent by the base station having downloaded the target file and used for requesting to register as the file providing equipment, the method further comprises:
selecting (S201), from file providing equipment, target file providing equipment for a base station which has not downloaded the target file, wherein the file providing equipment comprises one or more file servers, or the file providing equipment comprises one or more file servers and one or more base stations having downloaded the target file; and
sending (S202) a download instruction to the base station which has not downloaded the target file, wherein the download instruction comprises information of the target file and information of target file providing equipment, and the download instruction is used to instruct the base station which has not downloaded the target file to download the target file from the target file providing equipment.

2. The transmission control method according to claim 1, wherein in a case where the file providing equipment comprises only the one or more file servers, the selecting (S201), from the file providing equipment, the target file providing equipment for the base station which has not downloaded the target file comprises:
selecting, according to a network Topology, Topo, structure, a part of base stations which have not downloaded the target file as a first batch of base stations; and
selecting, from the one or more file servers, the target file providing equipment for the first batch of base stations.

3. The transmission control method according to claim 1, wherein the selecting (S201), from the file providing equipment, the target file providing equipment for the base station which has not downloaded the target file comprises:
selecting, from the file providing equipment according to a Topology, Topo, structure, the target file providing equipment for the base station which has not downloaded the target file, wherein the target file providing equipment and the base station which has not downloaded the target file belong to a same Topo group.

4. The transmission control method according to claim 1, wherein the selecting (S201), from the file providing equipment, the target file providing equipment for the base station which has not downloaded the target file comprises:
selecting, according to load state information of each file providing equipment, the target file providing equipment for the base station which has not downloaded the target file.

5. The transmission control method according to claim 4, wherein the selecting, according to the load state information of each file providing equipment, the target file providing equipment for the base station which has not downloaded the target file comprises:
selecting, according to the load state information of each file providing equipment, file providing equipment with a least load as the target file providing equipment for the base station which has not downloaded the target file;
or,
selecting, according to the load state information of each file providing equipment, file providing equipment whose current load is less than a preset load threshold as the target file providing equipment for the base station which has not downloaded the target file.

6. The transmission control method according to claim 4, wherein before the selecting, according to the load state information of each file providing equipment, the target file providing equipment for the base station which has not downloaded the target file, the method further comprises:
periodically sending (S301) a polling request to the file providing equipment; and
receiving (S302) polling request response information sent by the file providing equipment, wherein the polling request response information comprises the load state information of the file providing equipment.

7. The transmission control method according to claim 4, wherein before the selecting, according to the load state information of each file providing equipment, the target file providing equipment for the base station which has not downloaded the target file, the method further comprises:
periodically sending (S201) the polling request to the file providing equipment; and
in a case where polling request response information sent by the file providing equipment in response to the polling request is not received, reassigning file providing equipment for a base station which has not completed downloading a file from the file providing equipment.

8. The transmission control method according to claim 5, wherein the load state information comprises a number of first base stations, and the first base stations are base stations which are currently connected to the file providing equipment and need to download a file from the file providing equipment;
the selecting, according to the load state information of each file providing equipment, the file providing equipment with the least load as the target file providing equipment for the base station which has not downloaded the target file comprises:
selecting, according to the number of the first base stations of each file providing equipment, the file providing equipment with the smallest number of the first base stations as the target file providing equipment for the base station which has not downloaded the target file;
selecting, according to the load state information of each file providing equipment, the file providing equipment whose current load is less than the preset load threshold as the target file providing equipment for the base station which has not downloaded the target file comprises:
selecting, according to the number of the first base stations of each file providing equipment, the file providing equipment whose corresponding number of the first base stations is less than a preset connection number threshold as the target file providing equipment for the base station which has not downloaded the target file.

9. The transmission control method according to any one of claims 1 to 8, wherein the registration request further comprises: a preset load threshold of the base station having downloaded the target file.

10. A transmission control method, performed by a base station and comprising:
after downloading a target file, sending (S401) a registration request used for requesting to register as file providing equipment to a network management server, wherein the registration request comprises information of the target file; and
after registration is successful, providing (S402) a download service of the target file to a base station which has not downloaded the target file, wherein before the sending (S401) of the registration request used for requesting to register as the file providing equipment to the network management server, the method further comprises:
receiving a download instruction sent by the network management server, wherein the download instruction comprises information of the target file and information of target file providing equipment, wherein the target file providing equipment is a file server or a base station having downloaded the target file; and
downloading the target file from the target file providing equipment based on the download instruction.

11. A network management server, comprising: a first processor (601), a first memory (602) and a first communication bus (603);
wherein the first communication bus (603) is configured to implement connection communication between the first processor (601) and the first memory (602); and
the first processor (601) is configured to execute one or more computer programs stored in the first memory (602) to implement the operations of the transmission control method according to any one of claims 1 to 9.

12. A base station, comprising: a second processor (701), a second memory (702) and a second communication bus (703);
wherein the second communication bus (703) is configured to implement connection communication between the second processor (701) and the second memory (702); and
the second processor (701) is configured to execute one or more computer programs stored in the second memory (702) to implement the operations of the transmission control method according to any one of claim 10.

13. A storage medium, in which one or more computer programs are stored, wherein the one or more computer programs are able to be executed by one or more processors to implement the transmission control method according to any one of claims 1 to 9 or implement the transmission control method according to claim 10.

## Patentansprüche

1. Übertragungssteuerungsverfahren, das von einem Netzwerkverwaltungsserver durchgeführt wird und Folgendes umfasst:
Empfangen (S101) einer Registrierungsanforderung, die von einer Basisstation gesendet wird, die eine Zieldatei heruntergeladen hat, und für die Anforderung verwendet wird, sich als Dateibereitstellungsgerät zu registrieren, wobei die Registrierungsanforderung Informationen über die Zieldatei umfasst; und
Konfigurieren (S102) der Basisstation als das Dateibereitstellungsgerät, wobei das Dateibereitstellungsgerät verwendet wird, um einen Download-Dienst der Zieldatei für eine Basisstation bereitzustellen, die die Zieldatei nicht heruntergeladen hat, wobei das Verfahren vor dem Empfangen (S101) der Registrierungsanforderung, die von der Basisstation gesendet wird, die die Zieldatei heruntergeladen hat, und für die Anforderung verwendet wird, sich als das Dateibereitstellungsgerät zu registrieren, ferner umfasst:
Auswählen (S201) eines Zieldateibereitstellungsgeräts für eine Basisstation, die die Zieldatei nicht heruntergeladen hat, aus einem Dateibereitstellungsgerät, wobei das Dateibereitstellungsgerät einen oder mehrere Dateiserver umfasst oder das Dateibereitstellungsgerät einen oder mehrere Dateiserver und eine oder mehrere Basisstationen, die die Zieldatei heruntergeladen haben, umfasst; und
Senden (S202) einer Downloadanweisung an die Basisstation, die die Zieldatei nicht heruntergeladen hat, wobei die Downloadanweisung Informationen über die Zieldatei und Informationen über das Zieldateibereitstellungsgerät umfasst, und die Downloadanweisung verwendet wird, um die Basisstation, die die Zieldatei nicht heruntergeladen hat, anzuweisen, die Zieldatei von dem Zieldateibereitstellungsgerät herunterzuladen.

2. Übertragungssteuerungsverfahren nach Anspruch 1, wobei in einem Fall, in dem das Dateibereitstellungsgerät nur den einen oder mehrere Dateiserver umfasst, das Auswählen (S201) des Zieldateibereitstellungsgeräts für die Basisstation, die die Zieldatei nicht heruntergeladen hat, aus dem Dateibereitstellungsgerät umfasst:
Auswählen eines Teils der Basisstationen, die die Zieldatei nicht heruntergeladen haben, gemäß einer Topologiestruktur, Topo-Struktur eines Netzwerks, als einen ersten Satz von Basisstationen; und
Auswählen des Zieldateibereitstellungsgeräts für den ersten Satz von Basisstationen aus dem einen oder den mehreren Dateiservern.

3. Übertragungssteuerungsverfahren nach Anspruch 1, wobei das Auswählen (S201) des Zieldateibereitstellungsgeräts für die Basisstation, die die Zieldatei nicht heruntergeladen hat, aus dem Dateibereitstellungsgerät umfasst:
Auswählen des Zieldateibereitstellungsgeräts für die Basisstation, die die Zieldatei nicht heruntergeladen hat, aus dem Dateibereitstellungsgerät gemäß einer Topologiestruktur, Topo-Struktur, wobei das Zieldateibereitstellungsgerät und die Basisstation, die die Zieldatei nicht heruntergeladen hat, zu einer gleichen Topo-Gruppe gehören.

4. Übertragungssteuerungsverfahren nach Anspruch 1, wobei das Auswählen (S201) des Zieldateibereitstellungsgeräts für die Basisstation, die die Zieldatei nicht heruntergeladen hat, aus dem Dateibereitstellungsgerät umfasst:
Auswählen des Zieldateibereitstellungsgeräts für die Basisstation, das die Zieldatei nicht heruntergeladen hat, gemäß Lastzustandsinformationen jedes Dateibereitstellungsgeräts.

5. Übertragungssteuerungsverfahren nach Anspruch 4, wobei das Auswählen des Zieldateibereitstellungsgeräts für die Basisstation, die die Zieldatei nicht heruntergeladen hat, gemäß den Lastzustandsinformationen jedes Dateibereitstellungsgeräts umfasst:
Auswählen des Dateibereitstellungsgeräts mit einer geringsten Last als das Zieldateibereitstellungsgerät für die Basisstation, die die Zieldatei nicht heruntergeladen hat, gemäß den Lastzustandsinformationen jedes Dateibereitstellungsgeräts;
oder
Auswählen des Dateibereitstellungsgeräts, dessen aktuelle Last geringer als ein voreingestellter Lastschwellenwert ist, als das Zieldateibereitstellungsgerät für die Basisstation, die die Zieldatei nicht heruntergeladen hat, gemäß den Lastzustandsinformationen jedes Dateibereitstellungsgeräts.

6. Übertragungssteuerungsverfahren nach Anspruch 4, wobei das Verfahren vor dem Auswählen des Zieldateibereitstellungsgeräts für die Basisstation, das die Zieldatei nicht heruntergeladen hat, gemäß den Lastzustandsinformationen jedes Dateibereitstellungsgeräts, ferner umfasst:
periodisches Senden (S301) einer Abrufanforderung an das Dateibereitstellungsgerät; und
Empfangen (S302) von Abrufanforderung-Antwortinformationen, die von dem Dateibereitstellungsgerät gesendet werden, wobei die Abrufanforderung-Antwortinformationen die Lastzustandsinformationen des Dateibereitstellungsgeräts umfassen.

7. Übertragungssteuerungsverfahren nach Anspruch 4, wobei das Verfahren vor dem Auswählen des Zieldateibereitstellungsgeräts für die Basisstation, das die Zieldatei nicht heruntergeladen hat, gemäß den Lastzustandsinformationen jedes Dateibereitstellungsgeräts, ferner umfasst:
periodisches Senden (S201) der Abrufanforderung an das Dateibereitstellungsgerät; und
in einem Fall, in dem die Abrufanforderung-Antwortinformationen, die von dem Dateibereitstellungsgerät als Antwort auf die Abrufanforderung gesendet wurden, nicht empfangen werden, Neuzuweisen eines Dateibereitstellungsgeräts für eine Basisstation, die das Herunterladen einer Datei von dem Dateibereitstellungsgerät nicht abgeschlossen hat.

8. Übertragungssteuerungsverfahren nach Anspruch 5, wobei die Lastzustandsinformationen eine Anzahl von ersten Basisstationen umfassen und die ersten Basisstationen sind, die aktuell mit dem Dateibereitstellungsgerät verbunden sind und eine Datei von dem Dateibereitstellungsgerät herunterladen müssen;
das Auswählen des Dateibereitstellungsgeräts mit der geringsten Last als das Zieldateibereitstellungsgerät für die Basisstation, die die Zieldatei nicht heruntergeladen hat, gemäß den Lastzustandsinformationen jedes Dateibereitstellungsgeräts umfasst:
Auswählen des Dateibereitstellungsgeräts mit der kleinsten Anzahl der ersten Basisstationen als das Zieldateibereitstellungsgerät für die Basisstation, die die Zieldatei nicht heruntergeladen hat, gemäß der Anzahl der ersten Basisstationen jedes Dateibereitstellungsgeräts;
Auswählen des Dateibereitstellungsgeräts, dessen aktuelle Last geringer als der voreingestellte Lastschwellenwert ist, als das Zieldateibereitstellungsgerät für die Basisstation, die die Zieldatei nicht heruntergeladen hat, gemäß den Lastzustandsinformationen jedes Dateibereitstellungsgeräts umfasst:
Auswählen des Dateibereitstellungsgeräts, dessen entsprechende Anzahl der ersten Basisstationen kleiner als ein voreingestellter Schwellenwert für die Verbindungsanzahl ist, als das Zieldateibereitstellungsgerät für die Basisstation, die die Zieldatei nicht heruntergeladen hat, gemäß der Anzahl der ersten Basisstationen jedes Dateibereitstellungsgeräts.

9. Übertragungssteuerungsverfahren nach einem der Ansprüche 1 bis 8, wobei die Registrierungsanforderung ferner umfasst: einen voreingestellten Lastschwellenwert der Basisstation, die die Zieldatei heruntergeladen hat.

10. Übertragungssteuerungsverfahren, das von einer Basisstation durchgeführt wird und umfasst:
nach dem Herunterladen einer Zieldatei Senden (S401) einer Registrierungsanforderung, die für die Anforderung verwendet wird, sich als Dateibereitstellungsgerät zu registrieren, an einen Netzwerkverwaltungsserver, wobei die Registrierungsanforderung Informationen über die Zieldatei umfasst; und
nach erfolgreicher Registrierung Bereitstellen (S402) eines Downloaddienstes der Zieldatei für eine Basisstation, die die Zieldatei nicht heruntergeladen hat, wobei das Verfahren vor dem Senden (S401) der Registrierungsanforderung, die für die Anforderung verwendet wird, sich als das Dateibereitstellungsgerät zu registrieren, an den Netzwerkverwaltungsserver ferner umfasst:
Empfangen einer von dem Netzwerkverwaltungsserver gesendeten Downloadanweisung, wobei die Downloadanweisung Informationen über die Zieldatei und Informationen über das Zieldateibereitstellungsgerät aufweist, wobei das Zieldateibereitstellungsgerät ein Dateiserver oder eine Basisstation ist, die die Zieldatei heruntergeladen hat; und
Herunterladen der Zieldatei von dem Zieldateibereitstellungsgerät basierend auf der Downloadanweisung.

11. Netzwerkverwaltungsserver, umfassend: einen ersten Prozessor (601), einen ersten Speicher (602) und einen ersten Kommunikationsbus (603);
wobei der erste Kommunikationsbus (603) konfiguriert ist, um eine Verbindungskommunikation zwischen dem ersten Prozessor (601) und dem ersten Speicher (602) zu implementieren; und
der erste Prozessor (601) konfiguriert ist, um ein oder mehrere in dem ersten Speicher (602) gespeicherte Computerprogramme auszuführen, um die Operationen des Übertragungssteuerungsverfahrens nach einem der Ansprüche 1 bis 9 zu implementieren.

12. Basisstation, umfassend: einen zweiten Prozessor (701), einen zweiten Speicher (702) und einen zweiten Kommunikationsbus (703);
wobei der zweite Kommunikationsbus (703) konfiguriert ist, um eine Verbindungskommunikation zwischen dem zweiten Prozessor (701) und dem zweiten Speicher (702) zu implementieren; und
der zweite Prozessor (701) konfiguriert ist, ein oder mehrere in dem zweiten Speicher (702) gespeicherte Computerprogramme auszuführen, um die Operationen des Übertragungssteuerungsverfahrens nach einem von Anspruch 10 zu implementieren.

13. Speichermedium, auf dem ein oder mehrere Computerprogramme gespeichert sind, wobei das eine oder die mehreren Computerprogramme von einem oder mehreren Prozessoren ausgeführt werden können, um das Übertragungssteuerungsverfahren nach einem der Ansprüche 1 bis 9 zu implementieren oder das Übertragungssteuerungsverfahren nach Anspruch 10 zu implementieren.

## Revendications

1. Procédé de commande de transmission, exécuté par un serveur de gestion de réseau et comprenant :
la réception (S101) d'une demande d'enregistrement envoyée par une station de base ayant téléchargé un fichier cible et utilisée pour demander l'enregistrement en tant qu'équipement fournisseur de fichiers, dans lequel la demande d'enregistrement comprend des informations du fichier cible ; et
la configuration (S102) de la station de base en tant qu'équipement fournisseur de fichiers, dans lequel l'équipement fournisseur de fichiers sert à fournir un service de téléchargement du fichier cible vers une station de base n'ayant pas téléchargé le fichier cible, dans lequel, avant la réception (S101), la demande d'enregistrement envoyée par la station de base ayant téléchargé le fichier cible et utilisée pour demander l'enregistrement en tant qu'équipement fournisseur de fichiers, le procédé comprend en outre :
la sélection (S201), par l' équipement fournisseur de fichiers, d'un équipement fournisseur de fichiers cibles pour une station de base n'ayant pas téléchargé le fichier cible, dans lequel l'équipement fournisseur de fichiers comprend un ou plusieurs serveurs de fichiers ou l'équipement fournisseur de fichiers comprend un ou plusieurs serveurs de fichiers et une ou plusieurs stations de base ayant téléchargé le fichier cible ; et
l'envoi (S202) d'une instruction de téléchargement à la station de base n'ayant pas téléchargé le fichier cible, dans lequel l'instruction de téléchargement comprend des informations du fichier cible et des informations de l'équipement fournisseur de fichiers cibles et l'instruction de téléchargement sert à instruire la station de base n'ayant pas téléchargé le fichier cible de télécharger le fichier cible à partir de l'équipement fournisseur de fichiers.

2. Procédé de commande de transmission selon la revendication 1, dans lequel, si l'équipement fournisseur de fichiers ne comprend que le ou les serveurs de fichiers, la sélection (S201), par l'équipement fournisseur de fichiers, de l'équipement fournisseur de fichiers cibles pour la station de base n'ayant pas téléchargé le fichier cible comprend :
la sélection, selon une structure de topologie, Topo, de réseau d'une partie des stations de base n'ayant pas téléchargé le fichier cible en tant que premier lot de stations de base ; et
la sélection, parmi le ou les serveurs de fichiers, de l'équipement fournisseur de fichiers cibles pour le premier lot de stations de base.

3. Procédé de commande de transmission selon la revendication 1, dans lequel la sélection (S201), par l'équipement fournisseur de fichiers, de l'équipement fournisseur de fichiers cibles pour la station de base n'ayant pas téléchargé le fichier cible comprend :
la sélection, par l'équipement fournisseur de fichiers selon une structure de topologie, Topo, de l'équipement fournisseur de fichiers cibles pour la station de base n'ayant pas téléchargé le fichier cible, dans lequel l'équipement fournisseur de fichiers cibles et la station de base n'ayant pas téléchargé le fichier cible appartiennent à un même groupe Topo.

4. Procédé de commande de transmission selon la revendication 1, dans lequel la sélection (S201), par l'équipement fournisseur de fichiers, de l'équipement fournisseur de fichiers cibles pour la station de base n'ayant pas téléchargé le fichier cible comprend :
la sélection, selon les informations d'état de charge de chaque équipement fournisseur de fichiers, de l'équipement fournisseur de fichiers cibles pour la station de base n'ayant pas téléchargé le fichier cible.

5. Procédé de commande de transmission selon la revendication 4, dans lequel la sélection, selon les informations d'état de charge de chaque équipement fournisseur de fichiers, de l'équipement fournisseur de fichiers cibles pour la station de base n'ayant pas téléchargé le fichier cible comprend :
la sélection, selon les informations d'état de charge de chaque équipement fournisseur de fichiers, d'un équipement fournisseur de fichiers présentant la charge la plus faible en tant qu'équipement fournisseur de fichiers cibles pour la station de base n'ayant pas téléchargé le fichier cible ;
ou
la sélection, selon les informations d'état de charge de chaque équipement fournisseur de fichiers, d'un équipement fournisseur de fichiers dont la charge actuelle est inférieure à un seuil prédéfini de charge en tant qu'équipement fournisseur de fichiers cibles pour la station de base n'ayant pas téléchargé le fichier cible.

6. Procédé de commande de transmission selon la revendication 4, dans lequel, avant la sélection, selon les informations d'état de charge de chaque équipement fournisseur de fichiers, de l'équipement fournisseur de fichiers cibles pour la station de base n'ayant pas téléchargé le fichier cible, le procédé comprend en outre :
l'envoi périodique (S301) d'une demande de sondage à l'équipement fournisseur de fichiers ; et
la réception (S302) d'informations de réponse à la demande de sondage envoyée par l'équipement fournisseur de fichiers, dans lequel les informations de réponse à la demande de sondage comprennent les informations d'état de charge de l'équipement fournisseur de fichiers.

7. Procédé de commande de transmission selon la revendication 4, dans lequel, avant la sélection, selon les informations d'état de charge de chaque équipement fournisseur de fichiers, de l'équipement fournisseur de fichiers cibles pour la station de base n'ayant pas téléchargé le fichier cible, le procédé comprend en outre :
l'envoi périodique (S201) de la demande de sondage à l'équipement fournisseur de fichiers ; et
si les informations de réponse à la demande de sondage envoyée par l'équipement fournisseur de fichiers en réponse à la demande de sondage ne sont pas reçues, la réattribution d'un équipement fournisseur de fichiers à une station de base n'ayant pas terminé le téléchargement d'un fichier à partir de l'équipement fournisseur de fichiers.

8. Procédé de commande de transmission selon la revendication 5, dans lequel les informations d'état de charge comprennent un certain nombre de premières stations de base et les premières stations de base sont des stations de base actuellement connectées à l'équipement fournisseur de fichiers et doivent télécharger un fichier à partir de l'équipement fournisseur de fichiers ;
la sélection, selon les informations d'état de charge de chaque équipement fournisseur de fichiers, de l'équipement fournisseur de fichiers ayant la charge la plus faible en tant qu'équipement fournisseur de fichiers cibles pour la station de base n'ayant pas téléchargé le fichier cible comprend :
la sélection, selon le nombre de premières stations de base de chaque équipement fournisseur de fichiers, de l'équipement fournisseur de fichiers comportant le plus petit nombre de premières stations de base en tant qu' équipement fournisseur de fichiers cibles pour la station de base n'ayant pas téléchargé le fichier cible ;
la sélection, selon les informations d'état de charge de chaque équipement fournisseur de fichiers, de l'équipement fournisseur de fichiers dont la charge actuelle est inférieure au seuil de charge prédéfini en tant qu'équipement fournisseur de fichiers cibles pour la station de base n'ayant pas téléchargé le fichier cible comprend :
la sélection, selon le nombre des premières stations de base de chaque équipement fournisseur de fichiers, de l'équipement fournisseur de fichiers dont le nombre correspondant des premières stations de base est inférieur à un seuil prédéfini de nombre de connexions, en tant qu'équipement fournisseur de fichiers cibles pour la station de base n'ayant pas téléchargé le fichier cible.

9. Procédé de commande de transmission selon l'une quelconque des revendications 1 à 8, dans lequel la demande d'enregistrement comprend en outre : un seuil de charge prédéfini de la station de base ayant téléchargé le fichier cible.

10. Procédé de commande de transmission, exécuté par une station de base et comprenant :
après le téléchargement d'un fichier cible, l'envoi (S401) d'une demande d'enregistrement utilisée pour demander un enregistrement en tant qu'équipement fournisseur de fichiers à un serveur de gestion de réseau, dans lequel la demande d'enregistrement comprend des informations du fichier cible ; et
une fois l'enregistrement réussi, la fourniture (S402) d'un service de téléchargement du fichier cible à une station de base n'ayant pas téléchargé le fichier cible, dans lequel, avant l'envoi (S401) de la demande d'enregistrement utilisée pour demander l'enregistrement sous forme d'équipement fournisseur de fichiers au serveur de gestion de réseau, le procédé comprend en outre :
la réception d'une instruction de téléchargement envoyée par le serveur de gestion de réseau, dans lequel l'instruction de téléchargement comprend des informations du fichier cible et des informations de l'équipement fournisseur de fichiers cibles, dans lequel l'équipement fournisseur de fichiers cibles est un serveur de fichiers ou une station de base ayant téléchargé le fichier cible ; et
le téléchargement du fichier cible à partir de l'équipement fournisseur de fichiers cibles d'après l'instruction de téléchargement.

11. Serveur de gestion de réseau, comprenant : un premier processeur (601), une première mémoire (602) et un premier bus de communication (603) ;
dans lequel le premier bus de communication (603) est configuré pour implémenter une communication de connexion entre le premier processeur (601) et la première mémoire (602) ; et
le premier processeur (601) est configuré pour exécuter un ou plusieurs programmes informatiques stockés dans la première mémoire (602) pour implémenter les opérations du procédé de commande de transmission selon l'une quelconque des revendications 1 à 9.

12. Station de base comprenant : un second processeur (701), une seconde mémoire (702) et un second bus de communication (703) ;
dans lequel le second bus de communication (703) est configuré pour implémenter une communication de connexion entre le second processeur (701) et la seconde mémoire (702) ; et
le second processeur (701) est configuré pour exécuter un ou plusieurs programmes informatiques stockés dans la seconde mémoire (702) pour implémenter les opérations du procédé de commande de transmission selon l'une quelconque parmi la revendication 10.

13. Support de stockage, sur lequel sont stockés un ou plusieurs programmes informatiques, dans lequel le ou les programmes informatiques peuvent être exécutés par un ou plusieurs processeurs pour implémenter le procédé de commande de transmission selon l'une quelconque des revendications 1 à 9 ou pour implémenter le procédé de commande de transmission selon la revendication 10.
